# FASCICULE DE BREVET EUROPEEN

(11) **EP 2 095 704 B1**
(45) Date de publication et mention de la délivrance du brevet: **18.04.2012**
(21) Numéro de dépôt: 09153233.3
(22) Date de dépôt: 19.02.2009
(51) Int. Cl.: A01G 17/02, A01G 3/04

(54) **Machine de coupe utilisable notamment en viticulture, pourvue d'un outil à courson et d'un dispositif d'affûtage**
Schneidemaschine, insbesondere für den Einsatz im Weinbau, die mit einem Werkzeug für Ranken und einer Anschleifvorrichtung ausgestattet ist
Cutting machine used mainly in viticulture, equipped with a tool for tendrils and a sharpening device

(30) Priorité: 26.02.2008 FR 0801039
(43) Date de publication de la demande: 02.09.2009
(73) Titulaire: Andelfinger, Didier, 68000 Colmar (FR)
(72) Inventeur: Andelfinger, Didier, 68000 Colmar (FR)
(74) Mandataire: AMMANN PATENTANWÄLTE AG BERN

(56) Documents cités:
- EP-A- 0 696 418
- EP-A- 1 825 744
- FR-A- 2 752 360
- FR-A- 2 917 944

## Description

La présente invention porte sur une machine de coupe utilisable en agriculture, arboriculture ou viticulture, comportant une tête de coupe présentant au moins une paire de modules, selon le préambule de la revendication indépendante 1.

Outre l'agencement d'au moins un outil à courson, cette machine peut être pourvue d'un dispositif permettant à l'opérateur, chaque fois qu'il l'estimera nécessaire, d'affûter sur place cet outil.

Ainsi, l'invention se concentre essentiellement sur toute la partie inférieure des machines de coupe du genre précité afin d'en parfaire de façon significative leur fonctionnement et le confort d'utilisation.

Les exigences que pose tout utilisateur d'une telle machine de coupe sont exposées notamment dans EP-A-0 696 416, EP-A-0 696 417, EP-A-0 696 418, ainsi qu'à EP-A-1 825 744, du même inventeur que celui de la présente invention, à laquelle antériorité il est fait renvoi. Mais plus spécifiquement pour ce qui concerne la formation d'un courson, les objectifs recensés sont les suivants:
(1) excellente qualité de coupe (coupe franche et nette, alors qu'au contraire, pour la réduction du sarment en une pluralité de sections, préférence est donnée à une coupe de moindre qualité, voire quelque peu fragmentée),
(2) préservation des éléments environnants, soit:
   - fils de palissage,
   - tendeurs et,
   - piquets ou poteaux de palissage,
(3) ménagement de l'outil à courson lui-même, un dommage survenant à l'un quelconque des éléments environnants provoquant réciproquement et concomitamment, dans la majorité des cas, un dommage sur ledit outil (par exemple, partie tranchante de l'outil de coupe fortement émoussée),
(4) confort d'utilisation.

A ces quatre objectifs peut être ajouté un cinquième, à savoir :
(5) maintien sur une période maxima de la qualité de coupe, donc fiabilité de celle-ci (objectif qui, s'il est atteint, parfera bien entendu l'objectif (4)).

EP-A-0 147 344 décrit une machine de coupe dont au moins l'un des deux modules de coupe peut comporter un outil à courson incliné vers l'avant et formé de deux disques plaqués l'un contre l'autre pour produire une coupe par cisaillement. L'un de ces disques, relié à un montant vertical d'une structure porteuse du module de coupe, est fixe et présente à sa périphérie, sur un arc de cercle défini, une alternance de dents et d'échancrures. L'autre disque est entraîné en rotation à l'instar du disque denté et nervuré des outils de coupe du module de coupe et présente sur toute sa périphérie une alternance de dents et d'échancrures. L'outil à courson (comme tous les autres outils dont est équipée cette machine) comporte un élément fixe et un élément mobile pour produire un sectionnement par cisaillement.

Aucun des objectifs précités n'est atteint, sous réserve du premier, mais, en tout état de cause, durant un temps d'exploitation très limité seulement. En effet, un jeu allant croissant s'instaure rapidement entre lesdits éléments fixe et mobile, ce qui conduit à une dégradation très rapide d'une qualité de coupe de départ admise. En outre, les chocs sur les poteaux et les nombreux sectionnements du fil de palissage constatés accélèrent le délabrement de cet outil. On comprend que les fréquents démontages du module de coupe en vue d'inévitables restaurations dudit outil, voire de remplacements prématurés de ce dernier, sont rédhibitoires.

EP-A-0 696 416 divulgue une machine de coupe présentant un module de coupe et un module d'amenage. L'outil de coupe inférieur est du même genre que celui des outils empilés au-dessus de lui, c'est-à-dire composé essentiellement d'une scie circulaire entraînée en rotation à grande vitesse et d'une cage l'entourant entièrement, également entraînée en rotation, mais à une vitesse dont la composante tangentielle correspond environ à la vitesse d'avancement du tracteur auquel est attelée la machine. Toutefois, en vue d'une une meilleure qualité de coupe, la denture de la scie de cet outil de coupe inférieur est sensiblement plus fine que celle des scies supérieures. Cette machine peut en outre être équipée d'un outil spécifique selon EP-A-0 696 417 permettant de ménager les coursons, mais n'a pas pour fonction de produire une coupe.

Les objectifs (2) et (3) sont atteints, mais l'utilisateur doit cependant s'accommoder d'une qualité de coupe (objectif (1)) discutable. L'objectif (4) (confort d'utilisation) ne fait pas l'objet de critique particulière, puisque les questions d'une restauration et moins encore d'un remplacement prématuré de l'outil de coupe inférieur ne se posent pratiquement pas.

EP-A-1 825 744 divulgue une machine de coupe pouvant être dotée d'un outil à courson optionnel qui se distingue des outils de coupe agencés au-dessus de lui, en ce qu'il comporte deux éléments coopérant entre eux et constitués essentiellement, l'un, d'une plaque fixe, reliée à la structure porteuse du module et présentant sur un secteur défini orienté vers l'avant des doigts et l'autre, d'un disque entraîné en rotation, dont toute la périphérie est pourvue d'une alternance de couteaux tranchants et d'échancrures. Les doigts de la plaque fixe se dégagent hors du cercle extérieur déterminé par les parties extrêmes des couteaux, de sorte à canaliser les sarments et assurer le maintien de ces derniers juste avant que n'intervienne la coupe, laquelle est produite par cisaillement et sans rupture du courson.

La qualité de coupe obtenue avec cet outil à courson n'encourt pas de reproche. Mais il n'en est pas de même pour ce qui concerne la préservation des éléments environnants, ni du ménagement de l'outil lui-même, à cause des risques d'introduction d'un fil de palissage dans une échancrure, dont la réalisation est accrue dans des contextes de mises en oeuvre difficiles eu égard aux plants, au relief et/ou à l'état du terrain. Enfin, la condition de confort d'utilisation n'est pas remplie, puisqu'un affûtage dudit outil, qui s'impose périodiquement pour que reste assurée la bonne qualité de coupe, implique, soit une manipulation sur place par l'utilisateur, en tout état de cause fortement déconseillée, ne fût-ce que pour des règles de sécurité, à supposer même que cet utilisateur dispose sur place d'un outillage adéquat et d'un savoir-faire minimum, soit une immobilisation de la machine pour que l'intervention puisse être effectuée en bonne et due forme, dans les locaux de l'utilisateur si celui-ci y est habilité, ou plus généralement dans ceux du concessionnaire ou de l'agent chargé du service après-vente. Si la machine de coupe selon EP-A-1 825 744 constitue indéniablement une synthèse appréciable de nombreux avantages attendus aujourd'hui de l'utilisateur, la symbiose idéale n'est pas réalisée à raison des imperfections dont la formation du courson demeure chargée.

US-A-2006/0162309 décrit une machine de coupe du genre commenté, résultat d'une juxtaposition de moyens connus, notamment de EP-0 147 344 et de EP-0 696 416. Chacun des deux modules de coupe présente à sa partie inférieure un outil à courson comportant essentiellement deux éléments. Un premier élément en forme de disque denté est entraîné en rotation. Un second élément présente également une forme générale de disque. Constitué, sur un secteur d'environ 180° chaque fois, d'une partie dentée orientée vers l'autre module et d'une partie non dentée faisant fonction de protection, ce second élément est fixe. Le diamètre de cet outil à courson est « légèrement inférieur » au diamètre des outils de coupe du module agencés au-dessus de lui, afin de diminuer le risque d'engagement d'objets à ce niveau. Les deux éléments coopèrent entre eux pour produire une coupe par cisaillement.

La qualité de la coupe apparaît affectée très exactement des mêmes inconvénients que ceux qui ont été relevés avec la machine de coupe selon EP-0 147 344. Quant aux objectifs (2) et (3), les risques, notamment de sectionnement des fils de palissage et de dommages consécutifs sur l'outil à courson, demeurent, même si l'on peut supposer qu'ils devraient être quelque peu moins grands que ceux encourus avec la machine EP-0 147 344, compte tenu du diamètre de l'outil à courson par rapport au diamètre des autres outils de coupe.

Aussi l'objet de la présente invention est de proposer une machine de coupe du genre de celles commentées, qui soit, d'une part, dotée d'au moins un outil à courson permettant d'atteindre cumulativement les objectifs (1) à (4) énumérés supra et, d'autre part, équipée, en option, d'un dispositif d'affûtage de cet outil permettant d'atteindre l'objectif (5), ce dispositif pouvant être mis en oeuvre au besoin et à très bon compte, sur la parcelle ou à l'endroit même où ladite machine évolue momentanément, de sorte que soit toujours maintenue la qualité de coupe initiale des coursons, cela sur une longue période et sans autre intervention, une immobilisation de la machine dans un atelier ne s'imposant plus qu'aux seules fins d'un remplacement impératif d'un outil à courson ayant atteint un seuil d'usure irrattrapable, ce qui survient, en viticulture par exemple, après taille ou prétaille sur une superficie moyenne de l'ordre de quelque 800 hectares.

Les objectifs (1) à (4) sont atteints grâce aux moyens définis dans la revendication indépendante 1, tandis que les moyens selon la revendication dépendante 13 permettront de satisfaire également l'objectif (5). De manière générale, les autres revendications dépendantes portent sur des réalisations préférées de l'invention sur les plans technique et/ou économique.

Des variantes d'exécution de l'invention vont maintenant être décrites en détail, à titre d'exemples non limitatifs, à l'appui du dessin annexé dans lequel
la figure 1 est une vue de face d'une tête de coupe à une paire de modules [A], [B], à l'état fermé, l'un des modules étant équipé d'un outil à courson,
la figure 2A est une vue de dessous de la figure 1, mais limitée à la représentation des seuls outils inférieurs,
la figure 2B, analogue à la figure 2A, est une vue de dessous de la figure 3,
la figure 3 est une perspective partielle d'une tête de coupe à une paire de modules, l'état fermé, chacun des modules étant équipé d'un outil à courson,
la figure 4 est une variante de réalisation d'un outil à courson,
la figure 5 est une perspective de la tête de coupe selon la figure 1, vue de l'arrière dans le sens d'avancement, la machine étant équipée d'un dispositif d'affûtage selon une première variante d'exécution, ce dispositif étant placé en position passive,
la figure 6 est une vue arrière de la tête de coupe selon la figure 5, le dispositif d'affûtage étant placé en position active,
les figures 7 et 8 sont des vues en perspective, sous différents angles, d'un bloc d'affûtage du dispositif d'affûtage selon les figures 5 et 6,
les figures 9A et 9B représentent en perspective le bloc d'affûtage des figures 7 et 8 en position de travail,
la figure 10A est une perspective analogue à la figure 5, la machine étant équipée d'un dispositif d'affûtage selon une deuxième variante d'exécution, ce dispositif étant placé en position passive,
La figure 10B est une vue de détail de la figure 10A,
   et
les figures 11A et 11B sont des vues en perspective, sous deux angles différents, du dispositif d'affûtage selon les figures 10A et 10B, placé en position active,
observation étant faite que les échelles de représentation ne sont pas uniformes.

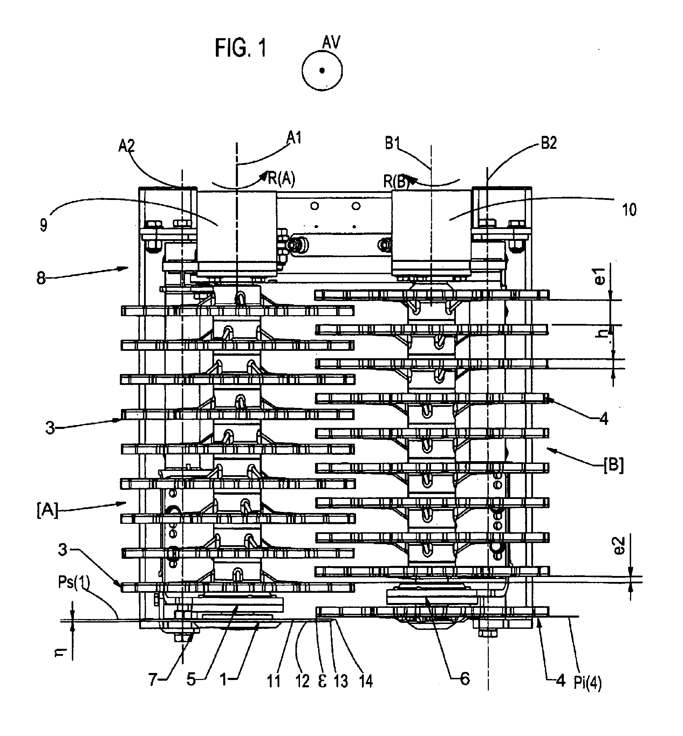

La tête de coupe représentée à la figure 1, vue dans le sens inverse du sens d'avancement (flèche AV), correspond à celle qui est décrite dans EP-A-1 825 744, auquel le présent exemple se réfère: elle se compose de deux modules de coupe [A], [B], d'axes A1, B1, essentiellement verticaux, portés par un châssis 8 pouvant être attelé à un tracteur (non représenté), avec aptitudes à pivoter autour d'axes A2, B2, respectivement, parallèles aux axes A1, B1, et à être entraînés en rotation sous l'action de moteurs hydrauliques 9 et 10 (flèches R(A) et R(B)), de préférence à des vitesses comprises dans un intervalle de l'ordre de [250 - 300] t/mn, les vitesses de rotation des deux modules pouvant, mais ne devant pas nécessairement, être égales entre elles. Chaque module de coupe repose sur un palier-support 5 ; 6 et est formé d'au moins un outil de coupe, usuellement d'un empilage d'une pluralité d'outils 3 ; 4 dont la périphérie présente des éléments actifs, c'est-à-dire des éléments intervenant directement dans l'opération de coupe, en l'occurrence des dents (non référencées), les outils d'un module pouvant interpénétrer dans des espaces définis e1 ménagés entre les outils de l'autre module, de sorte à permettre aux dits modules d'adopter toutes positions adéquates entre des positions maxima d'ouverture et de fermeture lors de la mise en oeuvre de la machine et plus spécialement au cours des opérations de coupe. De façon connue, les modules coopèrent entre eux en ce qu'ils canalisent la végétation dans un espace médian où elle sera réduite en une pluralité de sections. Selon les procédés de coupe usuels, chaque outil de coupe effectue ses coupes, que ce soit par cisaillement ou par sciage, indépendamment de tout autre outil de coupe de l'autre module, un outil de coupe comportant, en règle générale, deux éléments dont au moins l'un est entraîné en rotation. Mais selon EP-1 825 744, chaque coupe résulte d'actions mutuelles, donc d'une interaction, entre un outil de coupe 3 du module [A] et un outil de coupe 4 associé du module [B]. Ces outils 3, 4, identiques, de hauteur définie h avantageusement supérieure à 3 mm et de préférence égale à 15 mm environ, sont agencés chaque fois de façon inverse l'un par rapport à l'autre, la qualité de la coupe étant adaptable par réglage d'un espace e2 entre les faces supérieure et inférieure (non référencées) d'outils de coupe 3, 4 associés.

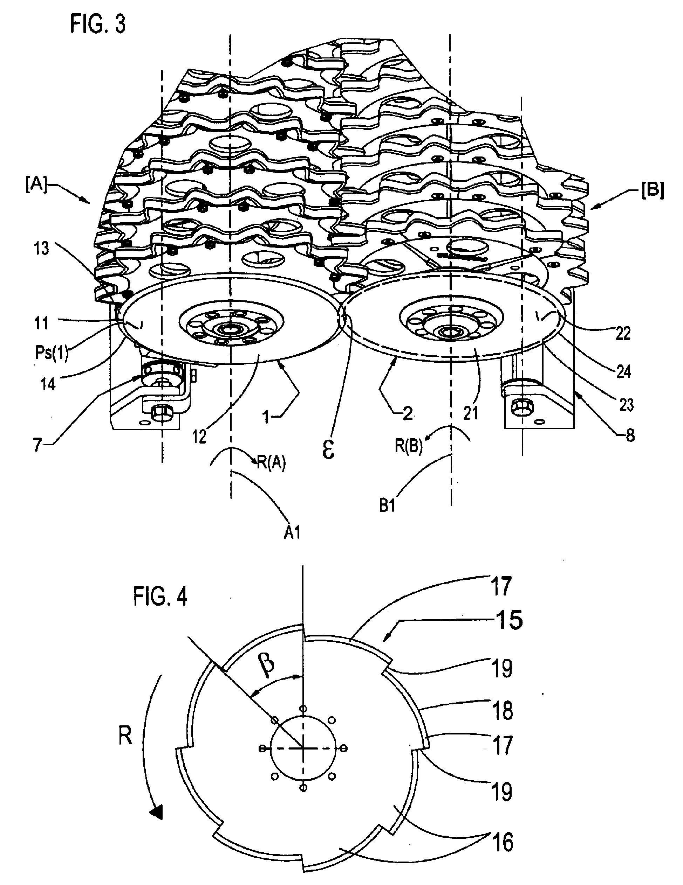

Les outils inférieurs des modules [A ; B], c'est-à-dire, selon l'agencement de la figure 1, l'outil à courson 1 et l'outil de coupe 4, et, selon l'agencement de la figure 3, les outils à courson 1, 2, sont montés sous les paliers-supports 5, 6, de sorte à éviter tout dommage que risquerait de causer le choc, notamment sur les coursons, d'une partie de machine.

L'outil à courson 1 de l'empilage d'outils du module [A] diffère des autres outils 3 empilés au-dessus de lui, en ce qu'il est formé d'un disque circulaire d'épaisseur η, dont la périphérie est biseautée pour former une arête tranchante 14 continue (le biseau 13 étant orienté vers le bas, en d'autres termes, le sommet du cône dont l'enveloppe contiendrait ce biseau est situé sous l'empilage du module, par définition sur l'axe A1 de celui-ci). La valeur η, relativement faible en comparaison avec la hauteur h préférée des outils 3, 4, est avantageusement comprise dans un intervalle de l'ordre de 3 à 6 mm, et préférentiellement égale à 4.0 mm ou 4.5 mm. Le plan Ps(1) de la face supérieure 11 de cet outil 1 s'étend sous le plan Pi(4) de la face inférieure du premier outil de coupe 4 de l'empilage du module [B], ces deux plans parallèles Ps(1), Pi(4) étant séparés d'une distance ε constituant un jeu fonctionnel, aisément ajustable grâce à un dispositif de réglage 7 connu. Les nombreux essais ont montré que la valeur ε se situait avantageusement dans un intervalle de l'ordre de 1 à 4 mm.

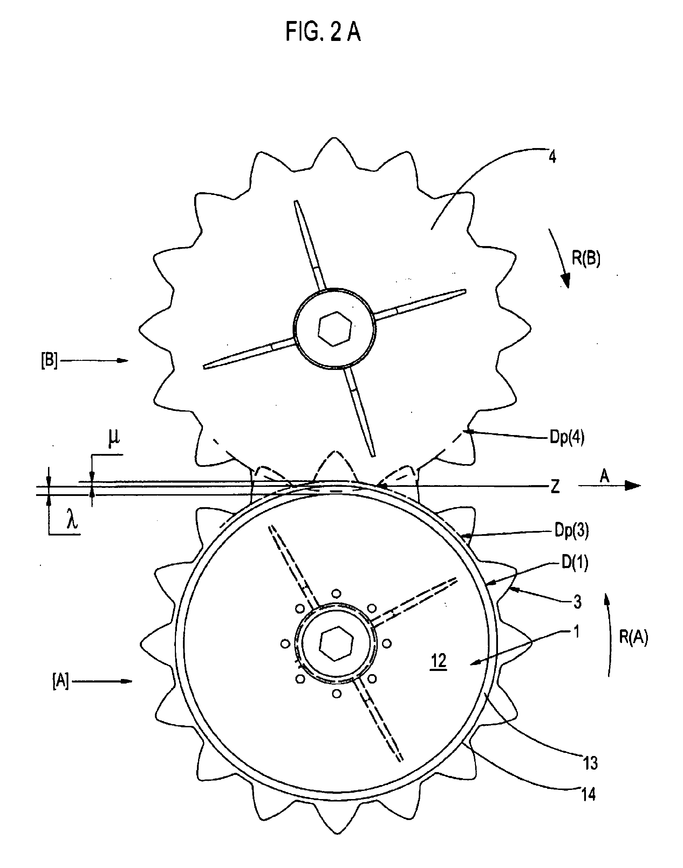

D'autres caractéristiques ressortent de la figure 2A, qui est une vue de dessous de la figure 1, limitée à une représentation schématique dudit outil à courson 1 et des premiers outils de coupe 3, 4 des modules [A], [B] respectivement. D'une part, le diamètre extérieur D(1) de l'outil à courson 1 est inférieur au diamètre de base Dp(3) de l'outil de coupe 3 (donc du diamètre à partir duquel se dégagent les éléments actifs précités, à savoir les dents), ce qui, outre le fait d'assurer une coupe de qualité, permet d'éviter tout heurt de l'arête tranchante périphérique 14 de l'outil à courson 1 contre les poteaux de palissage, même fortement inclinés, donc tout dommage sur ces derniers et sur l'outil 1 lui-même. La différence (Dp(3) - D(1)) est égale à 2µ, la valeur µ étant avantageusement comprise dans un intervalle de l'ordre de 0.1 à 20 mm et de préférence égale à 5 mm environ. D'autre part, à l'état fermé des modules [A; B], la circonférence de pied de diamètre Dp(4) de l'outil de coupe 4 déborde la circonférence extérieure de diamètre D(1) de l'outil de courson 1, sur une longueur λ, ce qui assure une taille inférieure des sarments bien achevée et écarte, par conséquent, tout risque d'ébréchures du courson ainsi formé. La valeur de λ est avantageusement comprise dans un intervalle de l'ordre de 15 à 50 mm et de préférence égale à 30 mm environ.

Cette taille peut être analysée en distinguant deux temps successifs, évidemment très rapprochés l'un de l'autre. Dans un premier temps le sarment est happé et aussitôt pris en tenaille par les dents des outils de coupe 3, 4 des modules [A ; B] pour être réduit, aussitôt arrivé dans une zone de coupe, en petites sections dont les longueurs peuvent s'écarter assez sensiblement d'une valeur théorique égale à (e1 + h) (voir figure 1), les sarments se présentant sous des inclinaisons les plus diverses autour de la verticale. Puis, dans une fraction de seconde qui suit, de par la conjugaison des forces agissant sur le sarment et résultant des mouvements d'avancement de la machine et de rotation des modules de coupe, le bas du sarment, prisonnier des dents de l'outil 4 du module [B], est propulsé dans une zone Z autour du point d'intersection de l'arête tranchante 14 de l'outil à courson 1 et du diamètre de pied Dp(4), où il est aussitôt cisaillé par l'outil à courson. Ainsi, la coupe, effectuée dans des conditions véritablement idéales, est aussi nette, plane et franche que celle qui serait obtenue au moyen d'un sécateur de haute qualité, tandis que le courson reste parfaitement intact.

Enfin, le fil de palissage est soumis, tout au long du déroulement des opérations de coupe, à différentes forces, dont les résultantes agissent sur lui de sorte qu'il ne peut que glisser ou évoluer sous la face 12 de l'outil à courson 1, ou sur la face supérieure (non référencée) de l'outil de coupe 4 avec lequel ledit outil à courson interagit pour produire la coupe, ou, plus sporadiquement, entre la face 11 de l'outil 1 et la face inférieure (plan Pi(4)) de l'outil 4, ou encore, enfin, passer de l'un de ces états à l'autre, mais cela, sans jamais ne pouvoir être accroché ni cisaillé.

La figure 3, qui est une perspective partielle de l'avant de la machine de coupe, montre une variante de montage selon laquelle l'outil inférieur du module [B], agencé sous le palier 6 (figure 1), est également un outil à courson. Ce dernier, de référence 2, est identique à l'outil à courson 1, sauf qu'il est monté dans une position inverse de celle de l'outil 1, le plan Ps(1) de la face 11 (voir aussi figure 1) s'étendant sous le plan (non représenté) de la face 21 de l'outil 2, le biseau 23 étant, contrairement au biseau 13, orienté vers le haut. Un jeu ε sépare les plans des faces 11, 21 des outils 1, 2 respectivement.

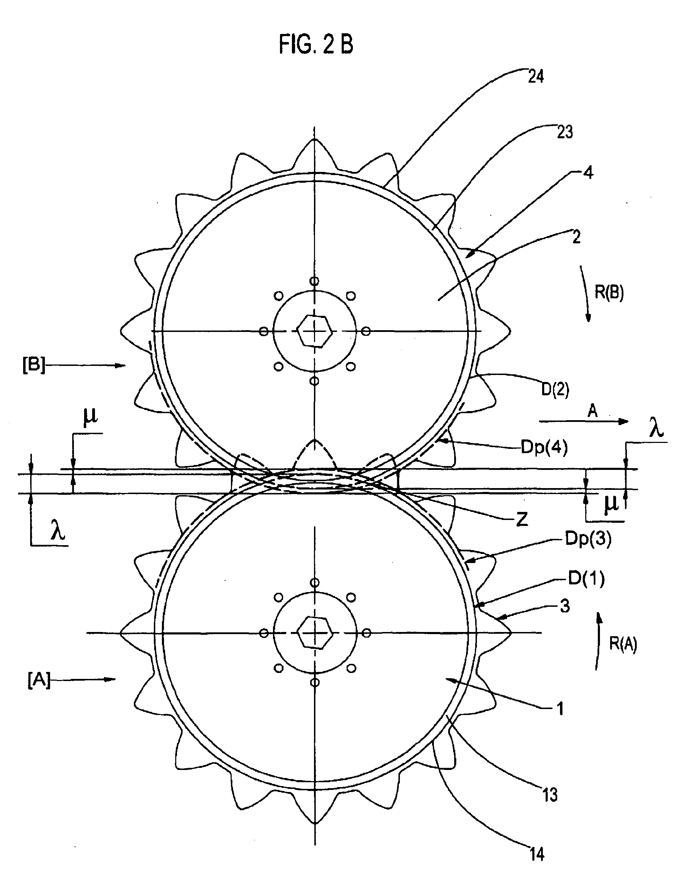

La figure 2B est une vue de dessous de la figure 3. Elle est analogue à la figure 2A, si bien que les explications données à l'appui de cette dernière, notamment celles concernant les paramètres µ et λ, s'appliquent mutatis mutandis. On observera uniquement que la taille des coursons résulte de l'interaction des parties actives 13, 14; 23, 24, en particulier des arêtes tranchantes 14, 24 des outils à courson 1, 2, produisant une coupe par cisaillement. Toutefois, la coupe du courson intervenant à l'intersection des arêtes tranchantes 14, 24 (la zone Z s'étendant, selon cette variante de montage, autour de cette intersection), peut s'effectuer sur deux niveaux. Si elle reste en soi d'excellente qualité, elle risque donc d'être étagée, du moins sur certains coursons, la distance entre les deux plans de coupe sur le courson correspondant approximativement à la valeur ε.

Lorsque la paire de modules de la tête de coupe est formée de modules du genre de ceux décrits dans EP-0 696 416 commenté plus haut (un module de coupe et un module d'outils ameneurs [C]) ou de tous autres genres de modules, l'outil inférieur de l'un des modules sera un outil à courson 1 ou 2 agencé de telle sorte qu'il soit apte à interagir avec un outil inférieur de l'autre module et que toutes les conditions, notamment géométriques, décrites plus haut, soit respectées. Par exemple, cet outil inférieur de l'autre module pourrait être du type de l'outil 4 ou 3, ou un outil à courson 2 ou 1. On comprend que le montage de deux outils à courson 1, 2 n'est pas dénué d'intérêt pour tous ces autres genres de machines de coupe.

La figure 4 montre un outil à courson 15 comme variante de réalisation possible. Cet outil présente une arête tranchante discontinue 18, en ce qu'elle est répartie sur une succession de secteurs biseautés 16 d'angle β comportant chacun un biseau 17. Les arêtes tranchantes 17 sont légèrement incurvées et reliées à la suite l'une à l'autre par un segment 19. Pour écarter tout accrochage avec un élément environnant, lors de sa rotation, il importe que cet outil 15 soit monté de sorte que ledit segment 19 ne se présente pas contre le sens de la rotation R. C'est au contraire chaque incurvation 17 qui suit ce sens.

Avantageusement, la composante tangentielle de la vitesse de rotation des outils d'un module est supérieure à la composante tangentielle de la vitesse de rotation de l'autre un module, ce qui permet une éjection optimale des segments de sarments coupés hors des fils de palissage, particulièrement de ceux qui sont enroulés autour de ces derniers. Lorsqu'un seul des modules est pourvu d'un outil à courson, on préférera que la vitesse de rotation la plus élevée soit appliquée sur ce module. La différence relative entre ces composantes tangentielles est égale à une valeur Δ et se situe de préférence dans un intervalle de l'ordre de 20 à 40%.

Avec l'utilisation d'une machine de coupe du genre évoqué, la qualité de coupe de tout outil à courson va progressivement se déprécier, son arête tranchante s'émoussant forcément. Il est donc indiqué de corriger cette usure chaque fois que cela s'avère nécessaire, en affûtant ledit outil, les fréquences d'affûtage, comptées en superficie, étant fonction de paramètres tels que le cépage, l'âge des vignes, etc., (une moyenne grossière oscillant autour d'une trentaine d'hectares). Or, ce besoin se manifeste pratiquement toujours à un moment où l'opérateur aura déjà bien entamé les travaux de coupe sur une parcelle, si bien qu'il décidera le plus souvent, comme l'expérience le montre, de poursuivre et de terminer les travaux entrepris, faisant, certes, l'économie d'une trop longue immobilisation de sa machine qu'impliquerait un affûtage de l'outil à courson, mais cela en s'accommodant d'une qualité de coupe plus discutable. Ce problème inhérent à celui de l'utilisation d'un outil à courson est résolu, à la connaissance de l'inventeur pour la toute première fois, grâce à un dispositif d'affûtage, dont deux formes de réalisation 30; 70 vont maintenant être décrites en détail, à titre d'exemples non limitatifs.

De manière générale, le dispositif d'affûtage se compose de moyens pouvant être regroupés, fonctionnellement, en quatre sous-groupes, soit un bloc d'affûtage, un ensemble d'éléments de liaison reliant ce bloc à la machine de coupe et permettant de le placer d'une position passive (c'est-à-dire d'attente) à une position active (c'est-à-dire de travail) et vice-versa, un ensemble de moyens d'ajustage dudit bloc par rapport à l'outil inférieur à affûter aux fins d'assurer un affûtage correct et de qualité de cet outil et, enfin, des moyens d'actionnement et de guidage du bloc, nécessaires pour effectuer des opérations d'affûtage.

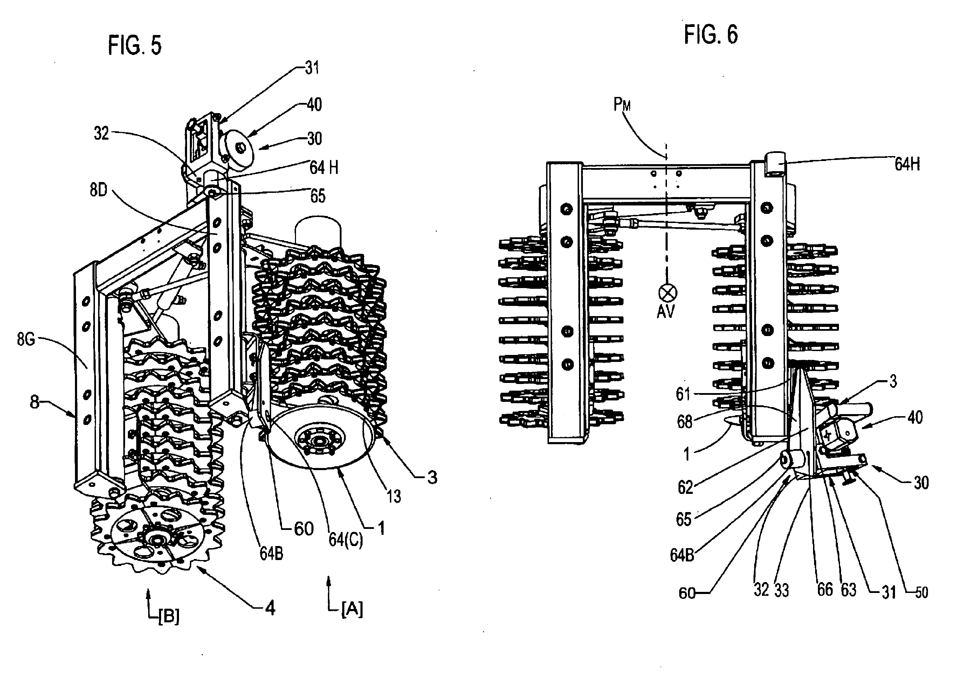

La première forme d'exécution 30 est représentée aux figures 5 et 6, avec un bloc d'affûtage 40 en positions passive et active respectivement, sur une machine de coupe correspondant à celle qui est montrée à la figure 1, dont le module [A] est équipé d'un outil à courson 1.

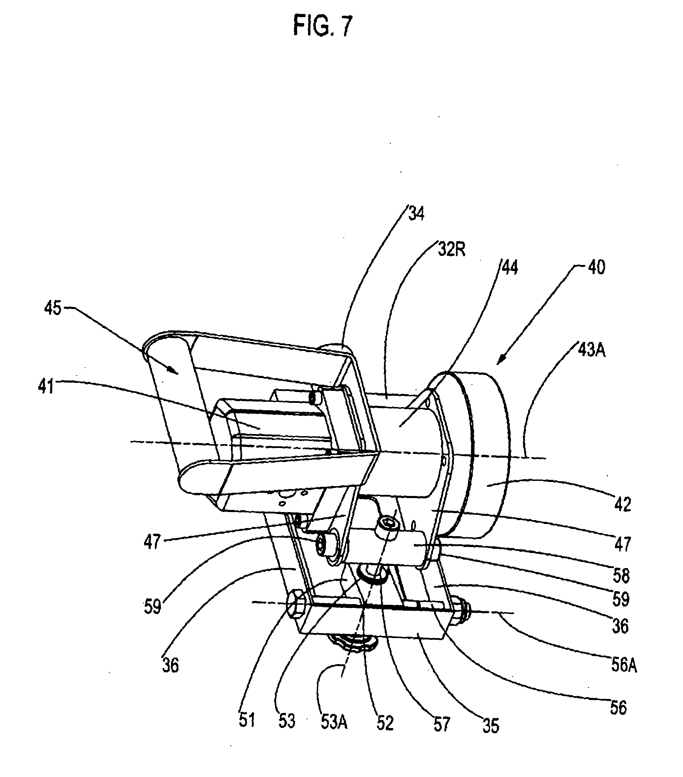

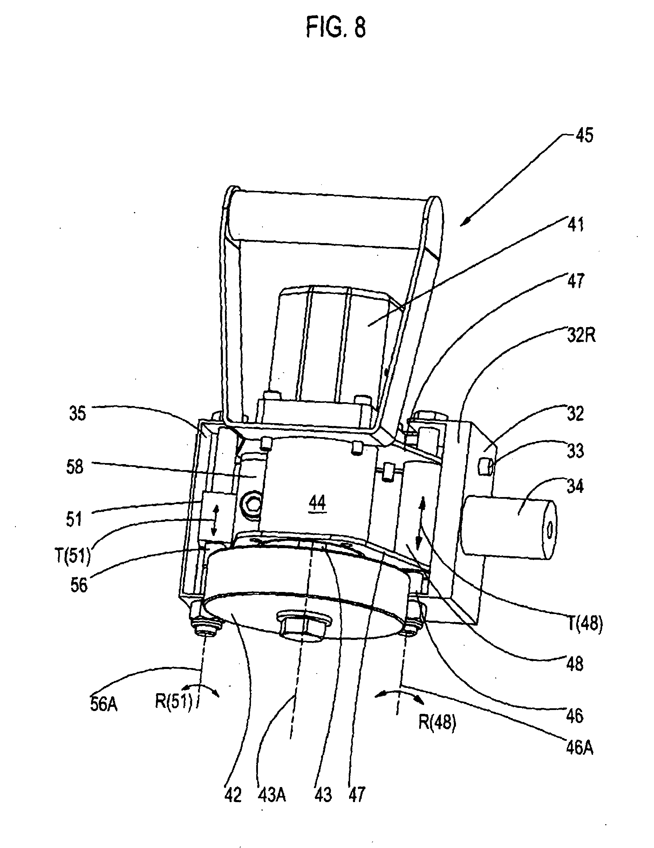

Le bloc d'affûtage 40 - voir figures 7, 8, 9A et 9B - se compose d'un berceau rigide 31 dans lequel est agencé un groupe de meulage comprenant un moteur 41, électrique ou hydraulique (relié dans ce dernier cas au circuit hydraulique de la machine de coupe par un flexible (non représenté)), une meule 42 montée sur un arbre 43, d'axe 43A, pouvant être entraîné en rotation selon la flèche R(M) et d'éléments intermédiaires classiques, tels que accouplement et roulements ou bagues, abrités dans une cage 44 fixée entre deux flasques 47 parallèles et identiques, de forme essentiellement trapézoïdale, et une poignée de manoeuvre 45. Le berceau 31 est de forme essentiellement parallélépipédique, avec un fond rectangulaire 37 pourvu d'une découpe 38, des rebords longitudinaux 36, surélevés d'un côté, et des rebords transversaux 35, 32, le rebord 32, se prolongeant d'un rabat 32 R. Entre les rebords longitudinaux 36 sont disposés des arbres de guidage 46, 56, d'axes 46A, 56A respectivement, bloqués au moyen d'éléments de fixation (non référencés). Se dégagent vers l'extérieur du rebord 32, perpendiculairement et fixés à celui-ci, un tenon 34 et un téton 33.

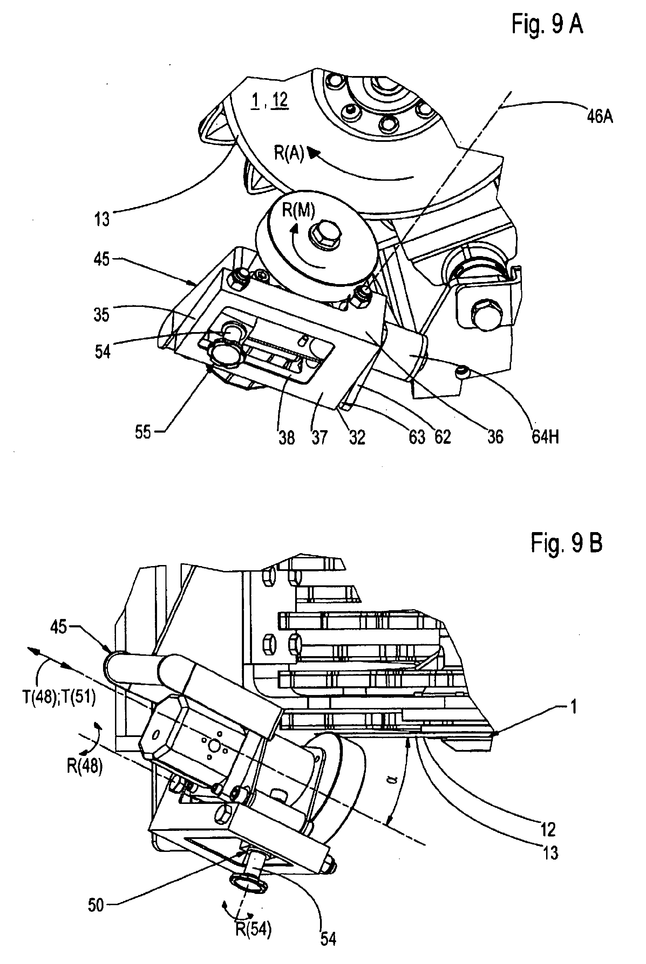

Sur l'un des flasques trapézoïdaux 47 sont fixés le moteur 41 ainsi que, dans la zone de la petite base, une poignée 45. Entre les extrémités des grandes bases (non référencées) des deux flasques 47 sont insérés des tubes 48, 58. Le tube 48 abrite des éléments de guidage appropriés pour pouvoir coulisser le long de l'arbre de guidage 46 (flèches T(48)) en rotation autour d'un axe 46A (flèches R(48)). Le tube 58 coopère avec une noix 51 qui comporte deux alésages 52, 53, d'axes orthogonaux 56A, 53A respectivement. La noix 51 est libre, d'une part, en translation le long de l'arbre de guidage 56 qui la traverse (flèches T(51), équivalentes aux flèches et mouvements axiaux T(48)) et, d'autre part, en rotation autour de l'axe 56A (flèches R(51)). Dans l'alésage 53 est insérée une tige 54 libre en rotation et qui se dégage de la découpe 38 du fond 37 du berceau 31, une extrémité de cette tige 54 étant pourvue d'une molette 55 (cf. figures 9A et 9B), l'autre extrémité présentant un taraudage central (non visible sur les figures) coopérant avec une tige filetée 57 solidaire de l'arbre 58. Ainsi, ces éléments 51, 54, 57 constituent un système vis-écrou 50 classique, grâce auquel le couple moteur 41 - meule 42 a une aptitude au pivotement autour de l'axe 46A de l'arbre de guidage 46.

La mise en oeuvre du dispositif d'affûtage se déroule rapidement, aisément et en toute sécurité.

Au départ, les deux modules [A], [B] étant en position ouverte, le bloc d'affûtage 40 est en position passive (figure 5), le tenon 34 du berceau 31 étant engagé dans un logement 64H fixé en haut du montant droit 8D du châssis 8 et immobilisé dans cette position par un organe de fixation 65.

Dans un premier temps, l'opérateur libère le bloc 40 pour le placer en position active, en l'immobilisant sur un support 60 agencé dans la partie basse du montant 8D, c'est-à-dire dans la zone de l'outil à courson à affûter, et formé d'une plaque d'assise 61, d'une aile 62 et d'une nervure 68. Le bloc 40 est inséré dans un logement 64B (identique au logement 64H) solidaire de l'aile 62 et immobilisé au moyen des mêmes organes de fixation 65, selon une inclinaison d'angle α par rapport au plan Ps(1) de l'outil à courson 1, correspondant à l'angle du biseau 13 (figure 9B). Ce positionnement angulaire peut être assuré par différents moyens de construction évidents pour l'homme du métier. Selon l'exemple, il procède de l'insertion du téton 33 dans un perçage 66 pratiqué dans l'aile 62, concomitante à l'introduction du tenon 34 dans le logement 64B. Il va de soi que plusieurs perçages 66 peuvent être prévus, de sorte que l'orientation du bloc 40 soit conforme à l'angle α d'un outil à courson donné. Selon une variante, ce positionnement peut résulter directement du choix d'une section polygonale adéquate du tenon 34 et de ses logements 64B; 64H.

Dans un deuxième temps, l'opérateur préajuste la meule 42 contre le biseau 13 au moyen de la molette 55, puis actionne les moteurs 41 et 9 à l'aide de commandes connues et non représentées, pour faire tourner la meule 42 et le module de coupe respectif ([A] selon l'exemple) à des vitesses et sens de rotation R(M) ; R(A) corrects (figure 9A).

Dans un troisième temps, il procède à l'affûtage en imprimant à la meule un mouvement de va-et-vient à l'aide de la poignée (flèches T(48) ; T(51)), et au besoin, en ajustant la force d'application de ladite meule contre le biseau 13 par action du système vis-écrou 50, décrit plus haut, à l'aide de la molette (flèche R(54)).

Enfin, dans un quatrième temps, l'opération d'affûtage étant terminée, l'opérateur replace et immobilise le bloc 40 en position passive.

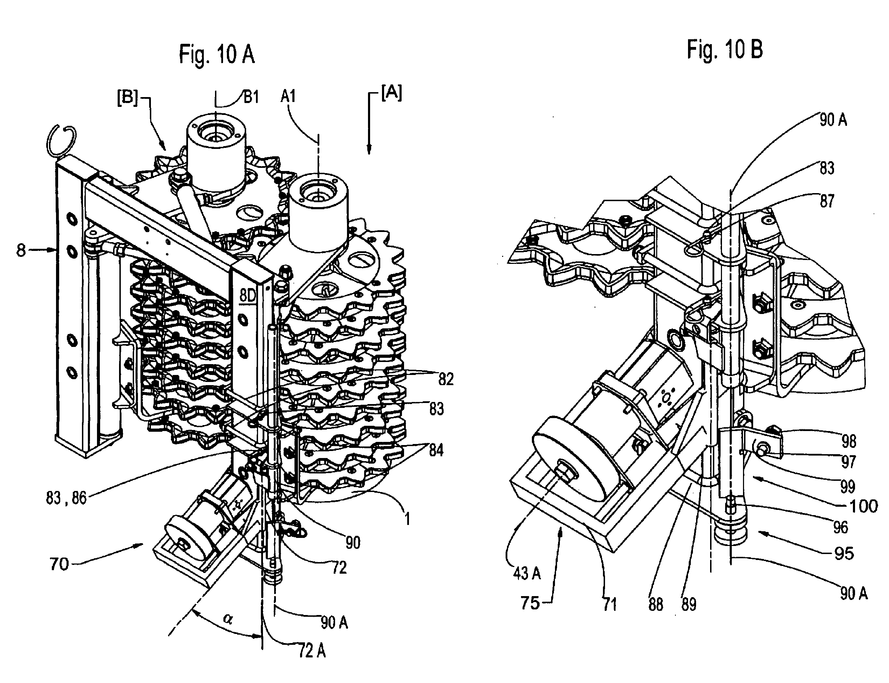

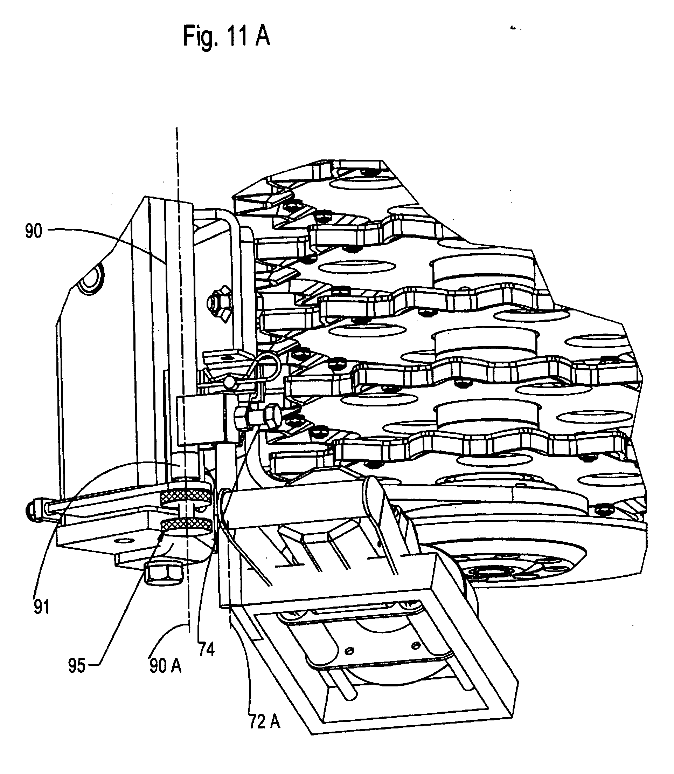

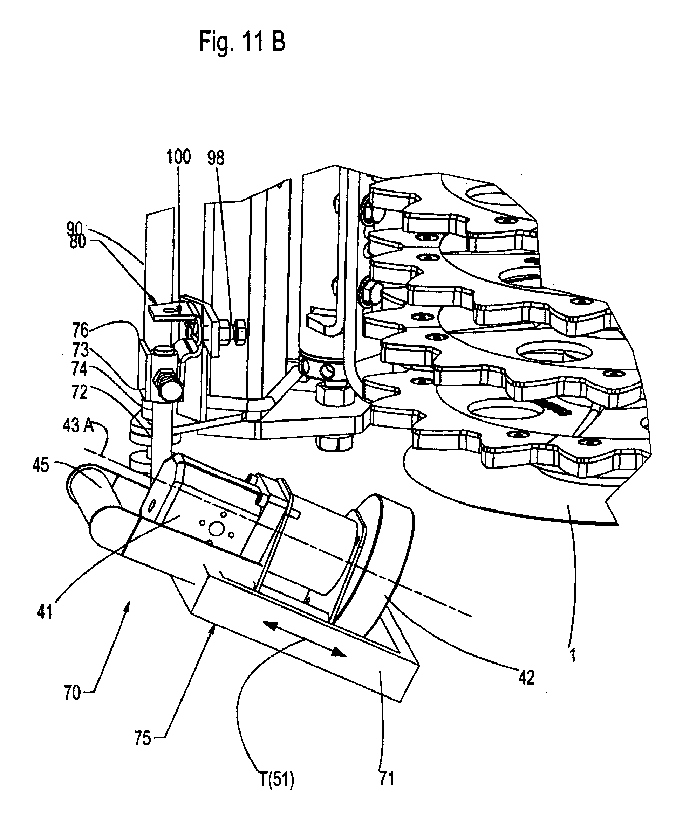

Une deuxième forme de réalisation 70 est représentée aux figures 10A, 10B, 11A et 11B.

A l'instar du dispositif d'affûtage 30, le dispositif d'affûtage 70 comprend un bloc d'affûtage 75 agencé à l'arrière de la machine de coupe, mais dans la partie inférieure du montant 8D du châssis 8 portant le module [A] équipé de l'outil à courson 1. Ce dispositif 70 est de construction plus rationnelle et surtout, sa mise en oeuvre s'avère plus aisée encore, les passages de la position passive de repos (figures 10A, 10B) à la position active de travail (figures 11A, 11B) et vice-versa se faisant par simple pivotement du bloc d'affûtage 75 autour d'un axe vertical 90A.

Le bloc d'affûtage 75 est semblable au bloc 40; pour les pièces et éléments identiques ou similaires, équivalentes quant à leur(s) fonction(s), on utilisera donc les mêmes références. Il se compose d'un berceau rigide 71 dans lequel est agencé le même groupe de meulage que celui qui est décrit plus haut et auquel il est fait renvoi, les seules différences notables consistant en ce qu'il ne comprend pas de système vis-écrou 50, l'ajustage que ce dernier permet étant obtenu ici par d'autres moyens, et en ce que la poignée 45 est disposée non pas au-dessus, mais au contraire en dessous de l'axe 43A, environ à une même distance.

Le berceau 71 est solidaire d'un arbre 72, d'axe 72A parallèle au montant vertical 8D, la partie supérieure (non référencée) de cet arbre étant logée dans une bague 73 (figure 11B). Cette bague est tenue entre un crochet 80 et une plaque de maintien 76 solidaires d'un tube de guidage 90, d'axe 90A parallèle à l'axe 72A. Elle comporte un taraudage dans lequel est engagée une vis de pression 74 pourvue d'un contre-écrou (non référencé) (figure 11B).

L'axe 43A de la meule 42 forme avec la verticale, donc avec l'axe 72A, un angle α correspondant à l'angle du biseau de l'outil à courson (voir première forme d'exécution et figure 10A). L'expérience a montré que la valeur optimale de cet angle, alliant une usure minima, une coupe de qualité et une bonne résistance du tranchant de l'outil de coupe à affûter, est de l'ordre de 30°, de sorte que la construction rigide arbre 72 - berceau 71 est préférable à celle (évidente pour l'homme du métier) qui permettrait de faire varier cette orientation.

Le tube 90 est monté libre en rotation et en translation et peut être bloqué à des positions voulues. Il comporte à son extrémité inférieure une coupelle 91 à perçage borgne ouvert vers le bas. Le guidage du tube est assuré par des alésages 84 que présentent deux plaques-supports et de guidage horizontales, de même référence 85, fixées sur le montant 8D au moyen de brides 82 à une distance définie par construction l'une de l'autre. Au moins la plaque-support 85 inférieure comporte, sur sa face supérieure, un téton 83.

Le crochet 80 comporte une aile horizontale supérieure 77 et un flanc vertical 79, lesquelles présentent un perçage 78 et un trou oblong 81 respectivement.

A la figure 10B, le téton 83 est engagé dans le perçage 78. Le crochet 80 s'appuie sur la plaque-support inférieure 85 et l'engagement dans le téton est sécurisé par une goupille élastique 87. Le bloc d'affûtage 75 est ainsi immobilisé dans sa position passive.

Sur le montant 8D, à sa partie inférieure, est fixée une embase 88 au moyen d'une bride 89 Sur celle-ci est agencé un dispositif de réglage en hauteur 95 formé d'une vis 96, de préférence à extrémité tronconique (figure 10B), d'une molette de manoeuvre et d'une molette d'arrêt (non référencés), l'axe de ce dispositif se confondant avec l'axe 90A du tube 90. En outre, est fixé sur l'embase 88 un butoir 100 en forme de L renversé. L'aile horizontale 99 de ce butoir comporte un taraudage dans lequel est vissée une vis d'arrêt 98 pourvue d'un contre-écrou, cette vis comportant un épaulement (non référencé) se prolongeant d'un téton 97 de diamètre correspondant à la largeur du trou oblong 81 du flanc 79 du crochet 80.

L'agencement du dispositif d'affûtage 70 est tel que sa mise en oeuvre, dont on va maintenant détailler les étapes, est des plus aisées.

Au départ, les modules [A], [B] étant en position ouverte, le bloc d'affûtage 75 se trouve en position passive (figures 10A et 10B).

Dans un premier temps, après avoir enlevé la goupille 87, l'opérateur soulève légèrement le bloc 75 pour libérer le crochet 80 du téton 83, fait pivoter ce bloc autour de l'axe 90A jusqu'à dégagement dudit crochet de son support 85 et, enfin, le laisse descendre par coulissement du tube 90 dans les guides 84, jusqu'à ce que le fond de la creusure de la coupelle 91 vienne buter contre l'extrémité de la vis 96 du dispositif de réglage 95.

Dans un deuxième temps, l'opérateur refait pivoter le bloc 75 jusqu'à ce que le flanc 79 du crochet 80 vienne s'appuyer contre l'épaulement de la vis 98 ou éventuellement contre l'aile 99 du butoir 100, si ledit épaulement est trop en retrait. Le téton 97 de la vis 98 se dégage hors du trou oblong 81 et l'opérateur enclipse la même goupille 87 sur ce téton 97 afin de pallier toute libération du bloc 75 de cette position.

Dans un troisième temps - s'il s'agit d'une première mise en oeuvre - l'opérateur procède à un réglage de base du bloc 75 par rapport à l'outil à courson 1 à affûter.
D'abord, il place le groupe de meulage (ensemble déplaçable dans le berceau 71) en position médiane pour permettre des courses de va-et-vient au moins approximativement égales (cf. Flèches T(51) à la figure 1B).

Ensuite, il actionne la vis 98 dans le sens adéquat, de sorte que le plan médian (non représenté) de la meule 42 soit située à peu près à mi-distance du biseau 13, et bloque cette position par action de la contre-molette du dispositif 95.

Enfin, l'opérateur va veiller à ce que l'axe 43A du groupe de meulage et l'axe de rotation du module (module [A], axe A1 selon l'exemple), soient concourants, en d'autres termes, à ce que ces axes soient contenus dans un même plan. A cette fin, il desserre la vis de pression 74, fait pivoter le bloc 75 autour de l'axe 72A de l'arbre 72 dans le sens approprié jusqu'à ce que l'ajustement soit correct, puis resserre ladite vis 74 et immobilise le bloc 75 dans cette position au moyen du contre-écrou (non référencé).

Comme évoqué, ces réglages selon le troisième temps sont uniques, en ce sens que l'opérateur n'aura plus à y revenir lors de mises en oeuvres ultérieures. Cela, malgré la diminution des diamètres de l'outil à courson et de la meule due aux opérations d'affûtage, les courses de translation du groupe de meulage restant suffisantes. Le réglage de base ou préréglage peut même être fait d'usine, de sorte que les opérations du troisième temps s'avéreront superflues ou se réduiront, selon le cas, à tel ou tel ajustement fin.

Dans un quatrième temps, l'opérateur effectue l'opération d'affûtage (cf. supra, quatrième temps à propos de la première forme de réalisation), sauf que le réglage de la meule 42 contre le biseau 13, au départ de cette opération d'affûtage et, au besoin en cours d'opération, s'effectue ici par actionnement du dispositif 95. Grâce à la nature oblongue du trou 81 pratiqué dans le flanc 79 du crochet 80, cette variation en hauteur ne se heurte à aucun empêchement.

Enfin, dans un cinquième temps, l'opération d'affûtage étant terminée, l'opérateur replace et immobilise le bloc 40 en position passive.

Il est possible d'agencer un dispositif 30; 70 pour réaffûter le biseau d'un outil à courson 2 agencé sous le module [B]. Tous les éléments sont configurés de sorte à permettre un montage en tous points symétrique par rapport à un plan médian P_{M} (figure 6) aux montages venant d'être décrits.

Quoique le dispositif 30; 70 soit particulièrement adapté pour rattraper l'usure de l'arête tranchante d'un outil à courson, tout outil inférieur d'une machine de coupe prévue pour la taille ou la prétaille, notamment des vignes, peut être traité, dans la mesure où la conformation dudit outil inférieur s'y prête.

### Liste des références et symboles

- [A]:: Module de coupe droit
- A1, A2:: Axes de rotation et de pivotement, respectivement, du mod. [A]
- [B]:: Module de coupe gauche
- B1, B2:: Axes de rotation et de pivotement, respectivement, du mod. [B]
vus chaque fois dans le sens d'avancement AV
- 1 :: Outil à courson (sur module [A])
- 2 :: Outil à courson (sur module [B])
- 3 :: Outil de coupe (sur [A])
- 4 :: Outil de coupe (sur [B]
(3 ≡ 4 ; montage inverse)
- 5 :: Palier inférieur sur mod. [A]
- 6 ;: Palier inférieur sur mod. [B]
- 7 :: Dispositif de réglage du jeu ε
- 8 :: Châssis de la tête de coupe
- 9 :: Moteur hydraulique d'entraînement en rotation du mod. [A]
- 10:: Moteur hydraulique d'entraînement en rotation du mod. [B]
- 11:: Face de dessus de l'outil à courson 1
- 12:: Face de dessous de l'outil à courson 1
- 13:: Biseau de l'outil à courson 1
- 14:: Arête tranchante circulaire (continue) de l'outil à courson 1
- 15:: Outil à courson (arête tranchante discontinue)
- 16:: secteurs biseautés de l'outil 15
- 17:: Biseaux
- 18:: Arêtes tranchantes discontinues
- 19:: Segments de liaison
- 20:: ∅
- 21:: Face de dessous de l'outil à courson 2
- 22:: Face de dessus de l'outil à courson 2
- 23:: Biseau de l'outil à courson 2
- 24:: Arête tranchante circulaire (continue) de l'outil à courson 2
- Ps(1):: Plan contenant la face supérieure 11 de l'outil à courson 1
- Pi(4):: Plan contenant la face de dessous de l'outil de coupe inférieur 4
- ε :: Ecart entre les plans P_{S}(1) et P_{I}(4)
- η :: Epaisseur d'un outil à courson 1 ;2
- e1:: Espace entre deux outils de coupe adjacents d'un même module
- e2:: Espace entre la face sup. d'un outil 3 du mod. [A] et la face inf. de l'outil 4 associé du mod. [B]
- h :: Epaisseur d'un outil de coupe 3 ; 4
- D(1):: Diamètre extérieur de l'outil à courson
- Dp :: Diamètre de pied d'un outil
- µ :: (D_{P} - D(1)/2
- λ :: Débordement
- Δ :: Diff. relative des vitesses de rotation entre modules
- 25 - 29 :: ∅
- 30 :: Dispositif d'affûtage (référence générale)
- 31 :: Berceau
- 32 :: Rebord transversal surélevé
- 32R:: Rabat du rebord 32
- 33 :: Téton fixé sur le rebord 32
- 34 :: Tenon fixé sur le rebord 32
- 35 :: Rebord transversal opposé et parallèle au rebord 32
- 36 :: Rebords longitudinaux parallèles (réf. unit.)
- 36S:: Parties surélevées des rebords 36
- 37 :: Fond du berceau
- 38 :: Découpe dans le fond 37
- 39 :: ∅
- 40 :: Bloc d'affûtage porté par le berceau 31 (réf. gén.)
- 41 :: Moteur hydraulique du bloc d'affûtage
- 42 :: Meule
- 43 :: Arbre de meule
- 43A:: Axe de l'arbre 43
- 44 :: Cage abritant des éléments d'accouplement
- 45 :: Poignée
- 46 :: Arbre de guidage
- 46A:: Axe de l'arbre de guidage 46
- 47 :: Flasques (réf. unit.)
- 48 :: Tube guidé
- 49 :: Ø
- 50 :: Système vis-écrou (réf. gén.)
- 51 :: Noix
- 52 :: Alésage (guidage de la noix sur l'arbre 56, axe 56A)
- 53 :: Alésage dans la noix 51
- 53A:: Axe de l'alésage 53, orthogonal à l'axe 56A
- 54 :: Tige de manoeuvre à taraudage central
- 55 :: Molette
- 56 :: Arbre de guidage
- 56A :: Axe de l'arbre de guidage 56
- 57 :: Tige filetée solidaire de l'arbre entretoise 48
- 58 :: Tube-entretoise entre les flasques
- 59 :: Vis de retenue du tube-entretoise 58
- 60 :: Support (réf. gén.)
- 61 :: Plaque d'assise
- 62 :: Aile de support
- 63 :: Face extérieure de l'aile 62
- 64B:: Logement du tenon 34 fixé sur l'aile 62
- 64H:: Logement du tenon 34 fixé sur le haut du montant 8D
- 64C:: Section (cylindrique) des logements 64B ; 64H
- 65 :: Organes de fixation de 30 dans les logements 64B/64H
- 66 :: Perçage dans l'aile 62 pour le téton 33
- 67 :: Organes de fixation plaque d'assise 61 sur montant 8D
- 68 :: Nervure de renfort
- 69 :: ∅
- 70 :: Dispositif d'affûtage, 2ème forme de réalisation (référence générale)
- 71 :: Berceau
- 72 :: Arbre solidaire du berceau
- 72A :: Axe de l'arbre 72
- 73 :: Bague dans laquelle est logée la partie supérieure de l'arbre 72
- 74 :: Vis de pression
- 75 :: Bloc d'affûtage (référence générale)
- 76 :: Plaque de maintien
- 77 :: Aile horizontale du crochet 80
- 78 :: Perçage dans l'aile 77
- 79 :: Flanc vertical du crochet 80
- 80 :: Crochet
- 81 :: Trou oblong dans le flanc 79
- 82 :: Brides de fixation des plaques 85
- 83 :: Téton sur plaques-supports 85
- 84 :: Alésages de guidage dans les plaques 85
- 85 :: Plaques-supports et de guidage
- 86 :: Ø
- 87 :: Goupille élastique
- 88 :: Embase
- 89 :: Bride de l'embase 88
- 90 :: Tube de pivotement/coulissement
- 90A :: Axe de pivotement/coulissement
- 91 :: Coupelle
- 92 :: Ø
- 93 :: Ø
- 94 :: Ø
- 95 :: Dispositif de réglage en hauteur
- 96 :: Vis de réglage
- 97 :: Téton
- 98 :: Vis d'arrêt
- 99 :: Aile horizontale du butoir
- 100 :: Butoir

## Revendications

1. Machine de coupe utilisable en agriculture arboriculture et viticulture, comportant une tête de coupe présentant au moins une paire de modules ([A], [B]) au moins l'un des modules de la paire étant un module de coupe, les deux modules coopérant et/ou interagissant entre eux, chacun des modules comportant au moins un outil correspondant et ayant une aptitude au pivotement lui permettant de se rapprocher et de s'écarter de l'autre afin que puissent s'effectuer, respectivement, des opérations de coupe des sarments et de contournement des piquets et de tous autres obstacles, l'outil inférieur de l'un au moins des modules de la paire étant un outil à courson (1), dont le plan de la face supérieure s'étend sous le plan de la face inférieure d'un outil inférieur de l'autre module,
**caractérisée en ce que** l'outil à courson (1) est formé d'un disque essentiellement circulaire dont la périphérie présente au moins une arête tranchante (14; 18) que l'outil à courson (1) et ledit outil inférieur (4) de l'autre module interagissent, la coupe résultant de cette interaction, et que le diamètre extérieur D(1) de l'outil à courson est inférieur à un diamètre Dp d'un outil (3) au-dessous duquel il est agencé et à partir duquel diamètre Dp se dégagent des moyens actifs intervenant dans l'opération de coupe, la différence (Dp - D(1)) étant égale à une valeur définie 2µ.

2. Machine de coupe selon la revendication 1, **caractérisée en ce qu'**à l'état fermé des modules, la circonférence de pied de diamètre Dp d'un outil inférieur d'un module déborde sur une longueur définie λ la circonférence extérieure de diamètre D(1); D(2) de l'outil à courson agencé sur l'autre module.

3. Machine de coupe selon la revendication 1, **caractérisée en ce que** la valeur de µ est comprise dans un intervalle de l'ordre de 0.1 à 20 mm.

4. Machine de coupe selon la revendication 1 ou 2, **caractérisée en ce que** la valeur de λ est comprise dans un intervalle de l'ordre 15 à 50 mm respectivement.

5. Machine de coupe selon l'une quelconque des revendications 1 à 4, **caractérisée en ce que** l'outil à courson présente une arête tranchante (14) circulaire et un biseau (13) continus.

6. Machine de coupe selon l'une quelconque.des revendications 1 à 4, **caractérisée en ce que** l'arête périphérique (18) de l'outil à courson est discontinue, présentant une succession de secteurs (15) biseautés et d'arêtes tranchantes.

7. Machine de coupe selon l'une quelconque des revendications 1 à 6, **caractérisée en ce que** l'écart séparant le plan de la face supérieure (Pₛ(1)) de l'outil à courson et le plan de la face inférieure (Pᵢ(4)) l'outil inférieur (4) de l'autre module est égal à une valeur ε réglable grâce à un dispositif de réglage, cet écart étant avantageusement de l'ordre de 1 à 4 mm.

8. Machine de coupe selon l'une quelconque des revendications 1 à 7, **caractérisée en ce que** l'épaisseur de l'outil à courson est égale à une valeur définie η avantageusement comprise dans un intervalle de l'ordre de 3 à 6 mm.

9. Machine de coupe selon l'une quelconque des revendications 1 à 8, **caractérisée en ce que** l'outil à courson est disposé au-dessous d'un palier-support inférieur (5; 6) du module dont il fait partie.

10. Machine de coupe selon la revendication 9, **caractérisée en ce que** l'outil disposé au dessous du palier-support inférieur (5; 6) de chacun des modules est un outil à courson (1; 2; 1, 2).

11. Machine de coupe selon l'une quelconque des revendications 1 à 10, **caractérisée en ce que** la composante tangentielle de la vitesse de rotation des outils d'un module est supérieure à la composante tangentielle de la vitesse de rotation de l'autre un module, la différence relative entre ces composantes tangentielles étant égale à une valeur définie Δ avantageusement comprise dans un intervalle de l'ordre de 20 à 40 %.

12. Outil à courson agencé sur une machine de coupe selon le préambule de la revendication 1 et comportant les caractéristiques techniques définies dans la partie caractérisante de l'une quelconque des revendications 1, 5, 6 ou 8.

13. Machine de coupe selon l'une quelconque des revendications 1 à 11, **caractérisée en ce qu'**elle est équipée d'un dispositif d'affûtage (30; 70) permettant d'affûter sur place, à la demande, un outil à courson ou tout autre outil inférieur d'un module de coupe.

14. Machine de coupe selon la revendication 13, **caractérisée en ce que** le dispositif d'affûtage comporte un bloc d'affûtage (40; 75) qui peut être placé d'une position passive de repos à une position active de travail et vice-versa et que des moyens (34, 65) permettent de l'immobiliser dans chacune desdites positions et de l'en libérer.

15. Machine de coupe selon la revendication 14, **caractérisée en ce que** des moyens (33, 66) permettent un positionnement du bloc d'affûtage (40; 75) par rapport à l'outil à courson à affûter.

16. Machine de coupe selon la revendication 14 ou 15, **caractérisée en ce que** le bloc d'affûtage comprend un groupe de meulage qui est agencé dans un berceau (31) relié à une structure fixe de la machine de coupe et qui comporte une meule (42) ledit groupe étant guidé axialement dans ledit berceau, de sorte que des mouvements de va-et-vient peuvent lui être imprimés pour effectuer une opération d'affûtage.

17. Machine de coupe selon la revendication 15 ou 16, **caractérisée en ce que** le positionnement du bloc d'affûtage porte sur quatre paramètres, soit:
- l'inclinaison de son axe par rapport à l'axe de rotation de l'outil à courson,
- la réunion dans un même plan de son axe et de l'axe de rotation de l'outil à courson,
- sa situation dans un plan vertical par rapport au plan de l'outil à courson et
- sa distance, plus spécifiquement celle du plan médian de la meule par rapport au biseau de l'outil à courson.

18. Machine de coupe selon la revendication 17, **caractérisée en ce que** l'inclinaison de l'axe de la meule par rapport à l'axe de rotation de l'outil à courson est fixe ou réglable et correspond à l'angle de coupe dudit outil.

## Claims

1. Cutting machine for use in agriculture, arboriculture, or viticulture, comprising a cutting head having at least one pair of modules, at least one of the modules of the pair being a cutting module, the two modules cooperating and/or interacting with each other, each of the modules comprising at least one corresponding tool and having an ability to pivot that allows it to move towards and away from the other one in order to be able to perform operations for cutting vine shoots and keeping away from stakes and all other obstacles, the lowermost tool of at least one of the modules of the pair being a spur tool the plane of the upper surface of which extends below the plane of the lower surface of a lowermost tool of the other module,
**characterised in that** the spur tool is formed of an essentially circular disk whose periphery has at least one cutting edge, that the spur tool and the lowermost tool of the other module interact and the cutting action results from this interaction, and that the external diameter D(1) of the spur tool is smaller than a diameter Dp of a tool below which it is arranged, and active means involved in the cutting operation project from this diameter Dp, the difference (Dp - D(1)) being equal to a defined value 2µ.

2. Cutting machine according to claim 1, **characterised in that** in the closed state of the modules, the circumference of the root diameter Dp of a lowermost tool of a module overlaps the external circumference of diameter D(1); D(2) of the spur tool arranged on the other module on a length λ.

3. Cutting machine according to claim 1, **characterised in that** the value of µ is comprised in a range of the order of 0.1 to 20 mm.

4. Cutting machine according to claim 1 or 2, **characterised in that** the value of λ is comprised in a range of the order of 15 to 50 mm, respectively.

5. Cutting machine according to any one of claims 1 to 4, **characterised in that** the spur tool has a continuous circular cutting edge and bevel.

6. Cutting machine according to any one of claims 1 to 4, **characterised in that** the peripheral edge of the spur tool is discontinuous with a succession of bevelled sectors and cutting edges.

7. Cutting machine according to any one of claims 1 to 6, **characterised in that** the distance between the plane of the upper surface of the spur tool and the plane of the lower surface of the lowermost tool of the other module is equal to a value ε that is adjustable by means of an adjusting device, this distance being advantageously of the order of 1 to 4 mm.

8. Cutting machine according to any one of claims 1 to 7, **characterised in that** the thickness of the spur tool is equal to a defined value η that is advantageously comprised in a range of the order of 3 to 6 mm.

9. Cutting machine according to any one of claims 1 to 8, **characterised in that** the spur tool is arranged above a lower support bearing of the module to which it belongs.

10. Cutting machine according to claim 9, **characterised in that** the tool arranged above the lower support bearing of each one of the modules is a spur tool.

11. Cutting machine according to any one of claims 1 to 10, **characterised in that** the tangential component of the rotation speed of the tools of one module is greater than the tangential component of the rotation speed of the other module, the relative difference between these tangential components being equal to a defined value Δ that is advantageously comprised in a range of the order of 20 to 40 %.

12. Spur tool arranged on a cutting machine according to the preamble of claim 1 and comprising the technical characteristics defined in the characterising part of any one of claims 1, 5, 6, or 8.

13. Cutting machine according to any one of claims 1 to 11, **characterised in that** it is equipped with a sharpening device that allows sharpening, when required, a spur tool or any other lower tool of a cutting module in the field.

14. Cutting machine according to claim 13, **characterised in that** the sharpening device comprises a sharpening block that can be brought from a passive rest position to an active working position and vice-versa and that means allow locking and releasing it in each one of these positions.

15. Cutting machine according to claim 14, **characterised in that** means allow positioning the sharpening block with respect to a spur tool to be sharpened.

16. Cutting machine according to claim 14 or 15, **characterised in that** the sharpening block comprises a grinding assembly that is arranged in a cradle connected to a fixed structure of the cutting machine and comprises a grinding wheel, the assembly being axially guided in the cradle such that back and forth motions can be applied thereto for performing a sharpening operation.

17. Cutting machine according to claim 15 or 16, **characterised in that** the positioning of the sharpening block refers to four parameters, namely:
- the inclination of its axis with respect to the axis of rotation of the spur tool,
- the union of its axis and of the axis of rotation of the spur tool in one same plane,
- its location in a vertical plane with respect to the plane of the spur tool, and
- its distance, more specifically that from the centre plane of the grinding wheel with respect to the bevel of the spur tool.

18. Cutting machine according to claim 17, **characterised in** the inclination of the axis of the grinding wheel with respect to the axis of rotation of the spur tool is fixed or adjustable and corresponds to the cutting angle of that tool.

## Patentansprüche

1. In der Landwirtschaft, in der Baumzucht und in dem Weinbau verwendbare Schneidmaschine, mit einem mit mindestens einem Paar Modulen ([A], [B]) ausgerüsteten Schneidkopf, wobei mindestens eines der Module des Paars ein Schneid-Modul ist, wobei die beiden Module zusammenarbeiten und/oder unter sich interagieren, wobei jedes der Module mindestens ein entsprechendes Werkzeug umfasst und eine Schwenkfähigkeit aufweist, die ihm erlaubt, sich dem anderen zu nähern oder sich von diesem zu entfernen, um das Schneiden der Ranken bzw. das Umgehen von Pfählen und von allen anderen Hindernissen zu ermöglichen, wobei das untere Werkzeug mindestens eines der Module des Paars ein Fruchtholz-Werkzeug (1) ist, dessen Oberseiten-Ebene sich unter der Unterseiten-Ebene eines unteren Werkzeugs des anderen Moduls erstreckt, **dadurch gekennzeichnet, dass** das Fruchtholz-Werkzeug (1) aus einer im Wesentlichen kreisförmigen Scheibe besteht, dessen Umfang mindestens eine scharfe Kante (14; 18) aufweist, dass das Fruchtholz-Werkzeug (1) und das besagte untere Werkzeug (4) des anderen Moduls interagieren, wobei der Schnitt sich aus dieser Interaktion ergibt, und dass der Außendurchmesser D(1) des Fruchtholz-Werkzeugs kleiner ist als ein Durchmesser Dp eines Werkzeugs (3), unter dem es angeordnet ist, von welchem Durchmesser Dp aus aktive Mittel, die in den Schnittvorgang eingreifen, hervorragen, wobei der Unterschied (Dp - D(1)) gleich einem festgelegten Wert 2µ ist.

2. Schneidmaschine nach Anspruch 1, **dadurch gekennzeichnet, dass** im geschlossenen Zustand der Module der Fuß-Umfang mit Durchmesser Dp eines unteren Werkzeugs eines Moduls auf einer festgelegten Länge λ über den Außenumfang mit Durchmesser D(1): D(2) des auf dem anderen Modul angeordneten Fruchtholz-Werkzeugs hinaus ragt.

3. Schneidmaschine nach Anspruch 1, **dadurch gekennzeichnet, dass** der Wert von µ in einem Intervall in der Größenordnung von 0.1 bis 20 mm inbegriffen ist.

4. Schneidmaschine nach Anspruch 1 oder 2, **dadurch gekennzeichnet, dass** der Wert von λ einem Intervall in der Größenordnung von 15 bis 50 mm inbegriffen ist.

5. Schneidmaschine nach einem beliebigen der Ansprüche 1 bis 4, **dadurch gekennzeichnet, dass** das Fruchtholz-Werkzeug eine durchgehende kreisförmige scharfe Schnittkante (14) und eine durchgehende Abschrägung (13) aufweist.

6. Schneidmaschine nach einem beliebigen der Ansprüche 1 bis 4, **dadurch gekennzeichnet, dass** die Umfangs-Kante (18) des Fruchtholz-Werkzeugs unterbrochen ist, indem sie eine Folge von Abschnitten (15) von Abschrägungen und Schnittkanten darstellt.

7. Schneidmaschine nach einem beliebigen der Ansprüche 1 bis 6, **dadurch gekennzeichnet, dass** der Abstand zwischen der Oberseiten-Ebene (Ps (1)) des Fruchtholz-Werkzeugs und der Unterseiten-Ebene (Pi (4)) des unteren Werkzeugs (4) des anderen Moduls gleich einem über eine Einstell-Vorrichtung einstellbaren Wert ε ist, wobei dieser Abstand vorteilhaft in der Größenordnung von 1 bis 4 mm liegt.

8. Schneidmaschine nach einem beliebigen der Ansprüche 1 bis 7, **dadurch gekennzeichnet, dass** die Dicke des Fruchtholz-Werkzeugs gleich einem festgelegten Wert η ist, der vorteilhaft in einem Intervall in der Größenordnung von 3 bis 6 mm inbegriffen ist.

9. Schneidmaschine nach einem beliebigen der Ansprüche 1 bis 8, **dadurch gekennzeichnet, dass** das Fruchtholz-Werkzeug unter einem unteren Traglager (5; 6) des Moduls, von dem es ein Teil ist, angeordnet ist.

10. Schneidmaschine nach Anspruch 9, **dadurch gekennzeichnet, dass** das unter dem unteren Traglager (5; 6) jedes der Module angeordnete Werkzeug ein Fruchtholz-Werkzeug (1; 2; 1, 2) ist.

11. Schneidmaschine nach einem beliebigen der Ansprüche 1 bis 10, **dadurch gekennzeichnet, dass** die tangentiale Komponente der Drehgeschwindigkeit der Werkzeuge eines Moduls größer ist als die tangentiale Komponente der Drehgeschwindigkeit des anderen Moduls, wobei der relative Unterschied zwischen diesen tangentialen Komponenten gleich einem festgelegten Wert Δ ist, der vorteilhaft in einem Intervall in der Größenordnung von 20 bis 40 % inbegriffen ist.

12. Fruchtholz-Werkzeug, angeordnet auf einer Schneidmaschine gemäss Oberbegriff von Anspruch 1, das die in dem kennzeichnenden Teil eines beliebigen der Ansprüche 1, 5, 6 oder 8 festgelegten technischen Eigenschaften aufweist.

13. Schneidmaschine nach einem beliebigen der Ansprüche 1 bis 11, **dadurch gekennzeichnet, dass** sie mit einer Schleif-Vorrichtung (30, 70) ausgerüstet ist, die es ermöglicht, ein Fruchtholz-Werkzeug oder jedes andere untere Werkzeug eines Schneid-Moduls nach Bedarf an Ort und Stelle zu schleifen.

14. Schneidmaschine nach Anspruch 13, **dadurch gekennzeichnet, dass** die Schleif-Vorrichtung einen Schleifblock (40; 75) aufweist, der von einer passiven Ruhestellung in eine aktive Arbeitsstellung und umgekehrt gebracht werden kann, und **dadurch**, dass Mittel (34, 65) es erlauben, diesen in jeder der besagten Stellungen zu verriegeln oder freizugeben.

15. Schneidmaschine nach Anspruch 14, **dadurch gekennzeichnet, dass** Mittel (33, 66) erlauben, den Schleif-Block in Bezug auf das zu schleifende Fruchtholz-Werkzeug zu positionieren.

16. Schneidmaschine nach Anspruch 14 oder 15, **dadurch gekennzeichnet, dass** der Schleif-Block ein in einem mit einer festen Struktur der Schneidmaschine verbundenen Träger (31) angeordnetes und mit einer Schleifscheibe (42) ausgerüstetes Schleif-Aggregat umfasst, wobei das besagte Aggregat axial in dem besagten Träger geführt wird, so dass es hin und her bewegt werden kann, um einen Schleifvorgang durchzuführen.

17. Schneidmaschine nach Anspruch 15 oder 16, **dadurch gekennzeichnet, dass** die Positionierung des Schleif-Blocks auf vier Parameter beruht:
- die Neigung seiner Achse in Bezug auf die Drehachse des Fruchtholz-Werkzeugs,
- das Zusammenführen in einer selben Ebene seiner Achse und der Drehachse des Fruchtholz-Werkzeugs,
- seine Lage in einer vertikalen Ebene in Bezug auf die Ebene des Fruchtholz-Werkzeugs und
- seinen Abstand, genauer den Abstand der Mittelebene der Schleifscheibe in Bezug auf die Freifläche des Fruchtholz-Werkzeugs.

18. Schneidmaschine nach Anspruch 17, **dadurch gekennzeichnet, dass** die Neigung der Achse der Schleifscheibe in Bezug auf die Drehachse des Fruchtholz-Werkzeugs fest oder einstellbar ist und dem Schnittwinkel des besagten Werkzeugs entspricht.
